# FASCICULE DE BREVET EUROPEEN

(11) **EP 0 783 064 B1**
(45) Date de publication et mention de la délivrance du brevet: **11.04.2001**
(21) Numéro de dépôt: 97420001.6
(22) Date de dépôt: 03.01.1997
(51) Int. Cl.: E04F 15/10, E04F 13/18, E04F 13/08, E04C 2/54, E04B 1/61, F24D 3/14

(54) **ELément profilé composite et cloison mettant en oeuvre cet élément**
Verbundprofilelement und mit diesem hergestellte Trennwand
Profiled composite element and partition wall using such an element

(30) Priorité: 04.01.1996 FR 9600234
(43) Date de publication de la demande: 09.07.1997
(73) Titulaire: Socrep, 69120 Vaulx en Velin (FR)
(72) Inventeur: Crouzoulon, Pierre, 69006 Lyon (FR)
(74) Mandataire: Vuillermoz, Bruno

(56) Documents cités:
- DE-A- 3 317 731
- DE-A- 4 228 802
- DE-A- 4 237 912
- FR-A- 912 729
- GB-A- 604 190
- US-A- 5 247 773

## Description

L'invention concerne un nouvel élément profilé, réalisé en matière composite, et susceptible d'être assemblé avec des éléments du même type, afin de constituer une surface plane, telle que notamment un parquet, une cloison, caillebotis, etc... . Elle concerne également la cloison mettant en oeuvre de tels éléments, et notamment un parquet démontable.

Lors de la réalisation de manifestations, spectacles, bals, et autres évènements du même type, notamment réalisées en extérieur, il est courant de mettre en place un parquet amovible et démontable, afin d'une part, de garantir une certaine planéité, d'autre part, de conférer à l'ensemble un aspect esthétique certain, et enfin pour des raisons d'ordre technique, d'éviter que les déambulations et que les différents meubles, estrades, tables et chaises, etc... soit effectuées ou posés à même le sol.

Les parquets amovibles mis en oeuvre à ce jour, sont généralement réalisés en bois, sous la forme de panneaux rectangulaires, dont les dimensions sont le plus souvent de 5 m x 50 cm. De la sorte, on aboutit à des éléments unitaires dont la masse est comprise entre 30 et 37 kg. En d'autres termes, on arrive à une masse de plancher au mètre carré voisine de 14 kg. De fait, pour des planchers d'une superficie moyenne de 250 m², on aboutit ainsi à une masse globale de 3,5 tonnes, qu'il convient de charger dans le camion assurant le transport, puis de décharger, de monter puis de démonter le parquet, et enfin, de procéder à l'étape de rappatriement dudit parquet à son lieu de stockage ou au niveau d'un nouveau lieu de mise en place. En d'autres termes, la mise en oeuvre d'un tel parquet implique de nombreuses manipulations d'un matériel lourd. Par ailleurs, l'utilisation de tels parquets en bois présente des problèmes d'équerrage c'est à dire de respect des orientations à angle droit des différents éléments qui les constituent.

En outre, de tels parquets sont destinés à être mis en place sur tout type de sols, notamment de la boue et autres agents salissants, nécessitant un nettoyage lors de chaque utilisation. Or, sous l'action de l'humidité, le bois est bien connu pour sa putrescibilité, et requiert donc pour s'en affranchir, de procéder après lavage à des étapes de séchage, nécessitant quelque fois des périodes de stockage, et donc d'immobilisation importantes.

Enfin, les chevrons sur lesquels sont mis en place ces parquets en bois se vrillent, engendrant de fait des problèmes de recalage pour assurer ainsi une certaine planéité au plancher.

Afin de s'affranchir de ces inconvénients, on a proposé des parquets réalisés en aluminium. Outre l'inconvénient rédhibitoire du prix, de tels parquets sont relativement bruyants et induisent entre outre des phénomènes de reflets de la lumière ambiante, particulièrement désagréables pour les personnes déambulant sur ces planchers.

Enfin, on a également proposé des parquets réalisés en polyéthylène haute densité basse pression, réalisés par injection. Outre leur poids également élevé, leur coût est tel qu'il est incompatible pour un grand nombre d'applications. Enfin, la stabilité de tels parquets en polyéthylène est toute relative, car ils nécessitent un sol parfaitement plan, constituant une condition souvent difficilement réalisable.

L'objet de l'invention est de s'affranchir de ces différents inconvénients en proposant un élément profilé plus léger que les différents produits précédemment cités, facile à mettre en oeuvre, et notamment d'un coût réduit.

Cet élément profilé susceptible d'être assemblé réversiblement avec d'autres éléments du même type, définissant au sein de son épaisseur un certain nombre d'alvéoles s'étendant sur toute sa longueur, et réalisé en un matériau composite, dont l'un des composants est de la matière plastique, se caractérise en ce que le matériau composite constitutif est composé d'un mélange de polyoléfine(s), de sciure de bois, et éventuellement de matériaux adaptés permettant d'augmenter la rigidité dudit élément, notamment des fibres de verre, fibres de carbone, du polyaramide, des charges minérales, telles que du talc ou des carbonates, voire encore des fibres de roche.

En d'autres termes, l'invention consiste à réaliser des éléments profilés alvéolaires, réalisés en un matériau composite, permettant ainsi un gain certain en matière de poids, tout en leur conférant la rigidité nécessaire, notamment pour l'application comme parquet.

Cet élément profilé comporte un système d'assemblage du type tenon-mortaise, ménagé au niveau de deux de ses faces latérales opposées, sauf pour les éléments terminaux définissant les bords de la surface à réaliser, qui n'en comprennent qu'un, tenon ou mortaise, selon le bord au niveau duquel ils sont destinés à être positionnés. Ce système d'assemblage peut être en forme de queue d'aronde, voire en queue de sapin.

Le matériau composite est avantageusement constitué d'un mélange polyoléfine(s) et sciure de bois, d'une proportion respective comprise entre 90/10 % et 10/90 % en poids, la polyoléfine étant avantageusement constituée de polypropylène, compte-tenu de sa très faible densité. Ainsi, avec un matériau composite 50/50 polypropylène-bois, on arrive à une densité voisine de 0,6 kg par décimètre cube, soit, d'une densité bien inférieure à celle des éléments massifs réalisés en bois.

Par ailleurs, de par la constitution de ce matériau, celui-ci peut être ignifugé mais également coloré dans la masse, afin de conférer à ces éléments un aspect esthétique particulièrement recherché, tel que par exemple un aspect bois.

Avantageusement, les alvéoles définies par lesdits éléments peuvent être comblées par de la mousse plastique expansible, notamment du polyuréthanne, du polystyrène ou du polyéthylène, voire constituer une canalisation pour la circulation d'un fluide calorifique ou frigorifique, la surface définie par les éléments profilés comprenant alors des éléments complémentaires de jonction aux extrémités des longueurs desdits éléments, venant s'enficher dans lesdites alvéoles, afin de permettre le bouclage dudit circuit respectivement de chauffage ou de refroidissement.

Dans une variante de l'invention, l'une des alvéoles peut être comblée par le matériau constitutif desdits éléments, et donc de manière directement issue d'extrusion.

La manière dont l'invention peut être réalisée et les avantages qui en découlent ressortiront mieux des exemples de réalisation qui suivent donnés à titre indicatif et non limitatif à l'appui des figures annexées.

La figure 1 est une représentation schématique en perspective sommaire d'éléments profilés conformes à l'invention.

La figure 2 est une section transversale d'un élément type dont les figures 3 et 4 sont des représentations de détail du système d'assemblage, respectivement femelle et mâle.

Les figures 5 et 6 sont des représentations schématiques d'autres éléments profilés conformes à l'invention, notamment d'extrémités également représentés en section.

La figure 7 est une représentation schématique en perspective analogue à la figure 1 d'une autre forme de réalisation de l'invention.

La figure 8 est une vue du dessus de la forme de réalisation de la figure 7.

La figure 9 est une vue schématique en persepctive d'un embout, venant s'enficher aux extrémités des éléments profilés, dont la figure 10 est une vue du dessus et la figure 11 une vue latérale.

La figure 12 est une représentation schématique en section transversale d'une autre forme de réalisation de l'invention.

La description qui suit est plus particulièrement orientée vers la réalisation de parquets amovibles. Cependant, l'invention ne saurait se limiter à cette seule application, et toute réalisation de surfaces planes, qu'elles soient horizontales ou verticales, voire orientées différemment, est également couverte par l'invention, et notamment, la réalisation de cloisons verticales, la réalisation de constructions simples, telles que par exemple des abris de jardin, voire encore celle de caillebotis, etc...

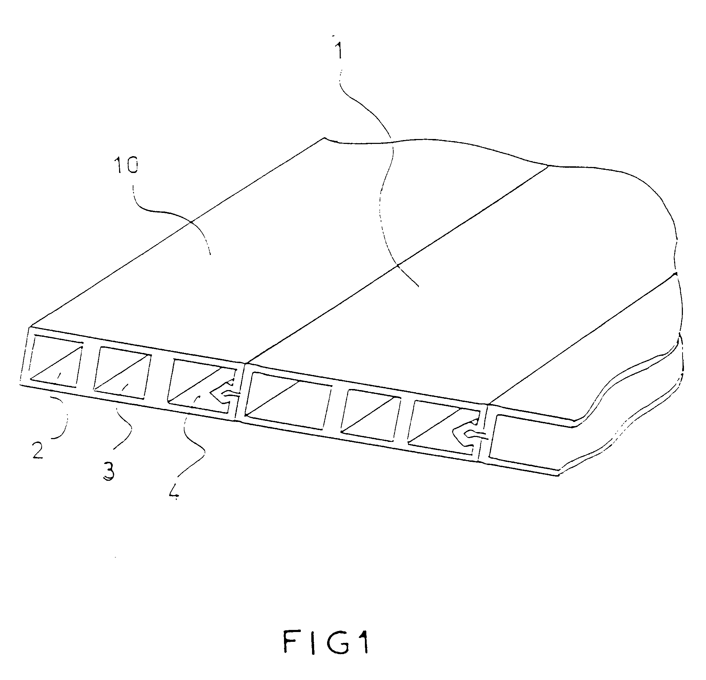

On a représenté sur la figure 1, une vue en perspective sommaire partielle de trois éléments (1) identiques conformes à l'invention, assemblés entre eux, afin de constituer un parquet démontable. Ces éléments sont réalisés à partir d'un matériau composite constitué par exemple de 15 % en poids de sciure de bois, et de 85 % en poids de polypropylène.

De manière connue, préalablement à l'obtention de l'élément selon sa configuration définitive, les deux constituants du matériau composite sont mélangés, sous conditions douces, afin de ne pas induire une élévation de température susceptible d'affecter la sciure, puis sont extrudés au moyen d'une filière d'extrusion selon le profil souhaité.

Dans le cas d'espèce, l'extrusion définit au niveau de chaque élément (1) trois alvéoles (2, 3, 4), parallèles entre elles, et s'étendant selon toute la longueur de chacun des éléments. Avantageusement, ces éléments ont des dimensions standardisées, typiquement ils présentent une longueur de cinq mètres, pour une largeur d'environ 10 cm et une épaisseur ou hauteur d'environ deux centimètres.

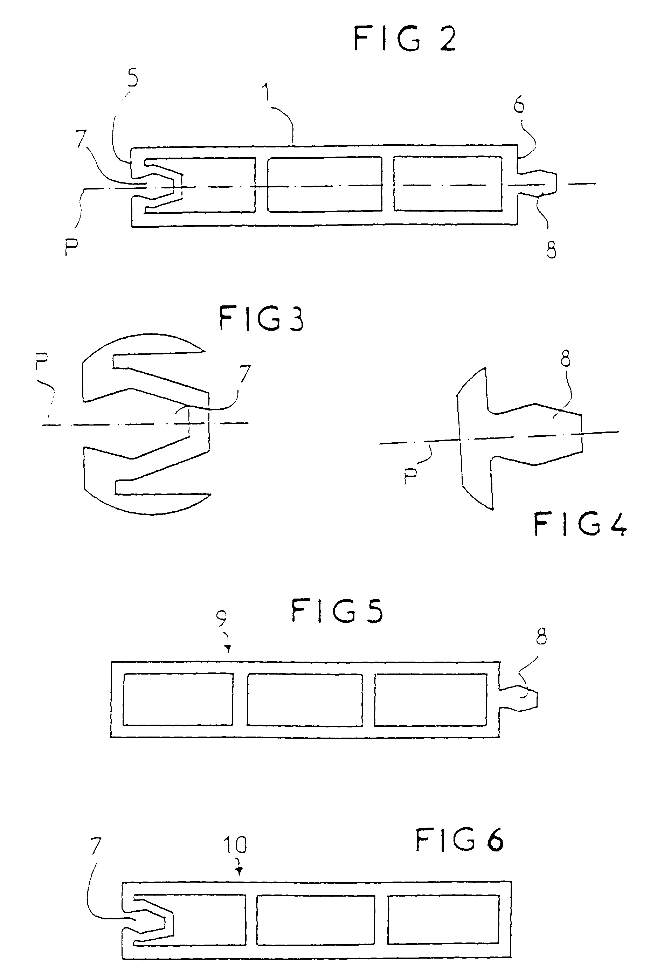

Par ailleurs, chacun de ces éléments présente au niveau de ses deux faces latérales principales opposées (5) et (6), c'est à dire les faces latérales correspondant à la plus grande longueur desdits éléments, un système d'assemblage du type tenon et mortaise, et avantageusement en forme de queue de sapin (7) et (8). Ces systèmes d'assemblage s'étendent également sur toute la longueur de chacun des éléments et sont d'ailleurs mieux représentés sur les figures 3 et 4.

En figure 3, on a représenté la partie femelle (7), symétrique par rapport à un plan longitudinal médian P de l'élément, et définissant un évidement de forme polygonale, et notamment hexagonale, destiné à coopérer avec une saillie mâle (8) de forme complémentaire, également symétrique par rapport au même plan médian P. La saillie (8), tout comme l'évidement (7) sont directement obtenus lors de la phase d'extrusion, de sorte qu'ils forment un ensemble monolithique avec l'élément correspondant. De la sorte, cette forme de réalisation avantageuse du système d'assemblage permet ainsi d'opérer un coulissement de la partie mâle (8) d'un élément donné dans la partie femelle (7) de l'élément immédiatement adjacent, pour ainsi favoriser leur mise en place.

Pour les bords latéraux de la surface à constituer, des éléments spécifiques (9) et (10) sont prévus, plus particulièrement représentés sur les figures 5 et 6. Ces éléments ne sont respectivement pourvus que de la saillie mâle (8), ou que de de l'évidement femelle (7).

On dispose ainsi d'un parquet complet, mis en place de manière traditionnelle sur chevrons ou tasseaux, la fixation des éléments au niveau de ces chevrons ou tasseaux s'effectuant par exemple par clouage ou vissage. On conçoit dès lors que compte-tenu du caractère alvéolaire des éléments utilisés, et de par le matériau mis en oeuvre, on aboutit à un gain certain en termes de poids, sans pour autant altérer la rigidité requise de chacun des éléments, et partant de surface définitive. A cet effet, et dans une version de l'invention représentée en figure 12, l'alvéole centrale (3) de chacun des éléments est comblée par le même matériau que celui constitutif desdits éléments. En d'autres termes, le comblement de l'alvéole centrale est directement obtenu en sortie d'extrudeuse, en modifiant pour ce faire la vis d'extrusion. Dans ce cas, il devient possible de visser ou de clouer les tasseaux (30) sur lesdits éléments de l'invention par en dessous, tel que représenté sur la figure 12, lesdits vis et/ou clou (31) venant s'ancrer dans ladite alvéole comblée, et donc de rendre la surface opérationnelle desdits éléments exempte de tout système de fixation. Par ailleurs, compte-tenu de la matière utilisée, et de son épaisseur au niveau de cette alvéole centrale, la résistance à l'arrachement des vis de fixation est accrue, renforçant la cohésion du parquet ou de la cloison ainsi réalisé.

Par ailleurs, le système d'assemblage particulièrement simple à mettre en oeuvre, s'oppose à toute déformation en dehors du plan P contenant les éléments, et notamment à une éventuelle désolidarisation générée par une contrainte exercée dans une direction autre que la direction de coulissement des éléments constitutifs du parquet les uns par rapport aux autres, en résumé à tout arrachage.

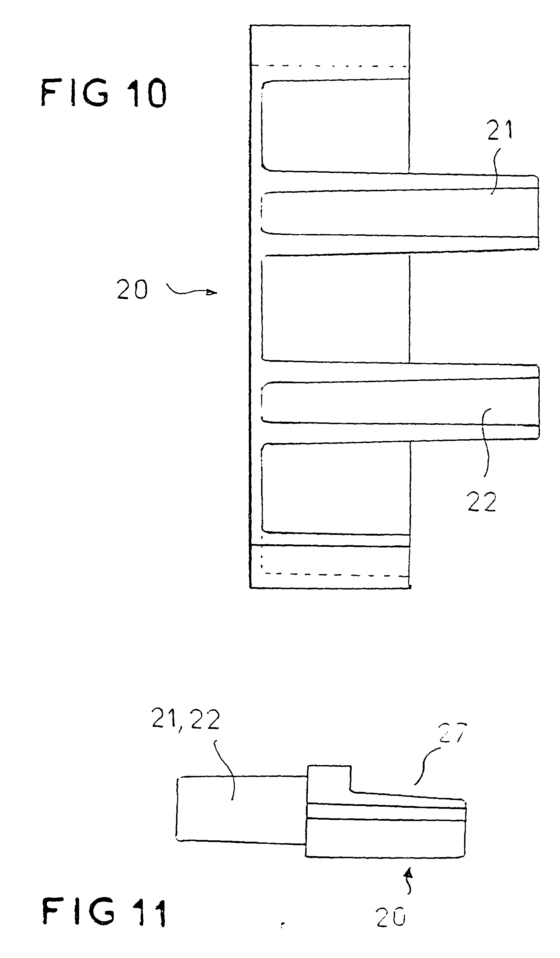

De plus, dans un souci tant d'esthétique que de fixation des éléments au niveau de la structure qui les reçoit, les deux extrémités libres de chacun desdits éléments reçoivent un embout, tel que représenté sur les figures 9 à 11, venant s'insérer en force au niveau des alvéoles. Cet embout (20), réalisé par exemple par injection d'un mélange également à base de polyoléfine et de sciure de bois, est de largeur correspondant à la largeur des éléments (1, 10) au niveau desquels il est destiné à être inséré, et présente des prolongements (21. 22) destinés à venir coulisser à l'intérieur des alvéoles desdits éléments. Pour ce faire, ces prolongements (21, 22) ont une section sensiblement complémentaire de celle des alvéoles. Afin d'assurer une réelle insertion en force de l'embout au sein de l'élément, au moins l'une des faces latérales desdits prolongements (21, 22) est munie de nervures (28) formant légère saillie par rapport au plan desdites faces latérales.

En outre, les faces latérales (23) et (24) de l'embout (20) sont munis d'organes de coopération, respectivement mâle (25) et femelle (26), destinés à coopérer avec les embouts immédiatement adjacents.

Enfin, l'embout présente une épaisseur non-constante, formant une zone amincie (27), destinée à venir s'insérer au niveau d'un organe de fixation et de serrage ménagé au sein de la structure, métallique par exemple, de support du plancher à réaliser. De la sorte, on optimise la fixation des différents éléments constitutifs du plancher, tout en conférant à celui-ci un caractère esthétique.

Lorsque cela est requis, il est possible de mettre en place au niveau des alvéoles, préalablement à l'insertion des embouts (20), des organes de rigidification (29), constitués de bois ou de métal, et s'étendant sur toute la longueur desdits éléments. Ces éléments ont une section telle, que l'une au moins de leurs dimensions est sensiblement égale à la hauteur interne des alvéoles.

Dans une forme de réalisation de l'invention particulièrement destinée à la réalisation de cloisons, lesdites alvéoles (2, 3, 4) sont susceptibles d'être remplies au moyen d'une mousse plastique expansible, telle que par exemple du polyuréthanne, du polystyrène ou du polyéthylène expansible. De la sorte, le comblement de ces alvéoles par de la mousse optimise l'isolation phonique et thermique.

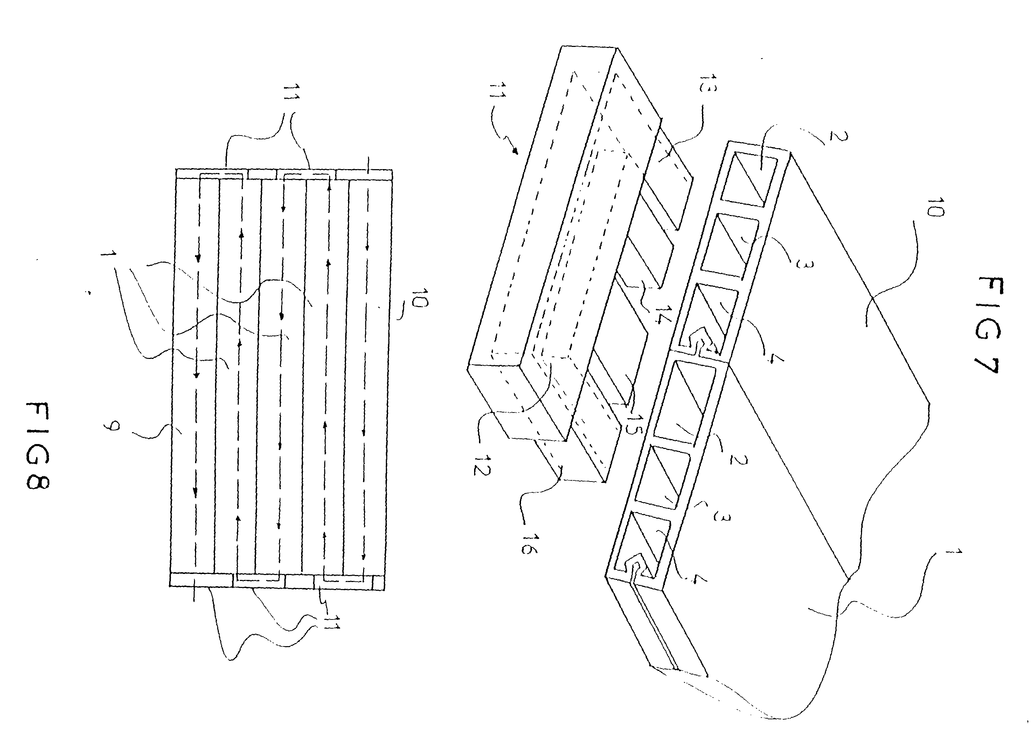

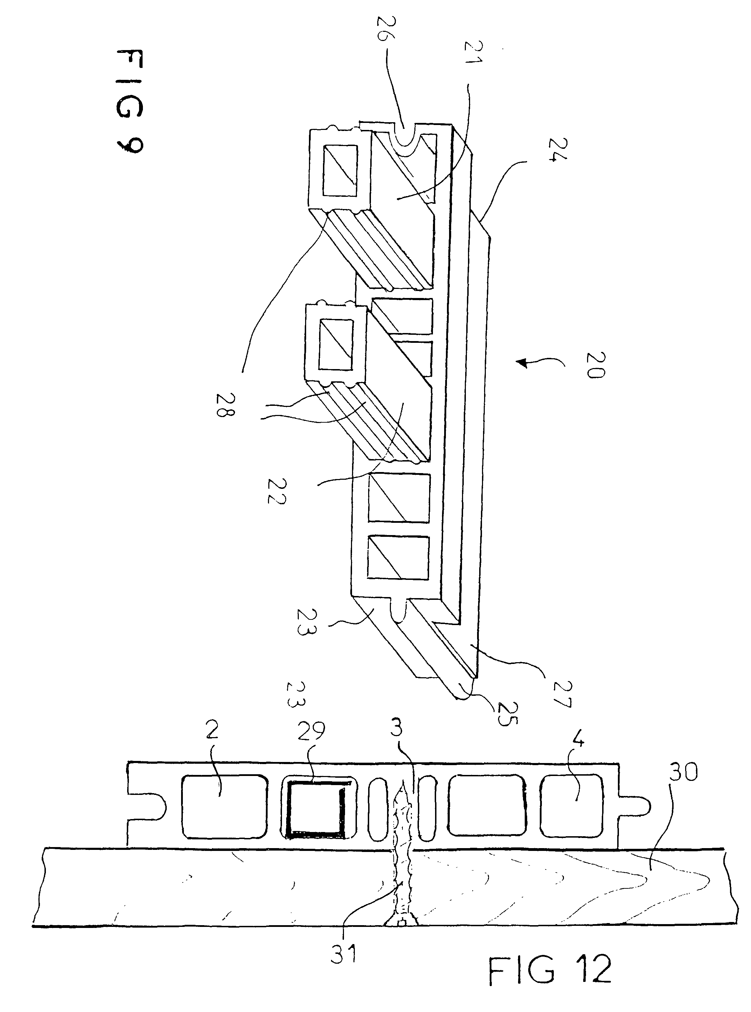

Dans une autre forme de réalisation de l'invention, décrite en liaison avec les figures 7 et 8, et dans laquelle on désire conférer au parquet ainsi réalisé une fonction de régulateur thermique, on munit les extrémités opposées du parquet ainsi réalisé, c'est à dire le lieu d'aboutissement des éléments constitutifs dudit parquet selon leur plus grande dimension, d'éléments supplémentaires (11) ou de jonction, susceptibles d'être emboîtés au niveau desdites extrémités à cheval sur deux éléments (1) adjacents. A cet effet, ces éléments supplémentaires de jonction ou embouts (11) présentent des prolongements (13 - 16) susceptibles de coopérer par emboitement avec les alvéoles, tel qu'on peut bien l'observer sur la figure 7, et plus précisément avec deux alvéoles de chacun des deux éléments profilés (1) adjacents.

De fait, les prolongements externes (13, 16) sont emboîtables dans les alvéoles centrales (3) de chacun desdits éléments profilés (1), mettant ainsi en communication lesdites alvéoles par l'intermédiaire d'une canalisation (12) ménagée au sein de l'élément de jonction (11), et s'étendant sensiblement perpendiculairement par rapport aux prolongements (13 - 16). Les prolongements internes (14, 15) viennent quant à eux s'emboîter au niveau des alvéoles externes adjacentes respectivement (4) et (2) des deux éléments contigus, et assurent essentiellement une fonction de maintien dudit élément de jonction au niveau des deux éléments profilés contigus. Bien entendu, les prolongements sont d'une dimension telle, et notamment présentent une circonférence telle, qu'ils s'adaptent parfaitement au profil interne des alvéoles avec lesquelles ils sont destinés à coopérer, afin également d'assurer une certaine étanchéité.

On a représenté sur la figure 8 une vue en plan de cette forme de réalisation, dans laquelle apparaissent les éléments de jonction (11) de part et d'autre du parquet réalisé.

Les éléments profilés extrêmes (9, 10) définissant les bords du parquet sont eux-mêmes mis en communication avec une centrale de fluide calorifique ou frigorifique, avec possibilité d'insérer une installation de recyclage du fluide assurant en outre sa circulation au sein du parquet ainsi constitué.

Cependant, dans une version plus simple d'un parquet démontable, ces éléments de jonction ou embouts (11) sont susceptibles d'être mis en oeuvre, et ce de la même manière, afin d'optimiser la cohésion finale du parquet ainsi réalisé. Dans ce cas, il est inutile que lesdits embouts présentent une canalisation interne (12).

Outre les applications déjà mentionnées, les éléments profilés conformes à l'invention sont également susceptibles d'autres applications, notamment la réalisation de palettes industrielles, de planchers flottants, tout particulièrement indiqués pour recevoir des machines lourdes, voire encore de caillebotis pour piscine et autres aires de jeux ou de sports. Par ailleurs, la rigidité des éléments peut être augmentée par l'intégration de matériaux adaptés lors de la constitution du mélange composite, notamment des fibres de verre, fibres de carbone, du polyaramide, mais également par l'adjonction de charges minérales, telles que du talc ou des carbonates, voire encore des fibres de roche, et ce, de manière connue afin d'augmenter le module d'Young dudit matériau résultant.

De plus, le matériau mis en oeuvre est avantageusement traité contre l'humidité, et ce de manière connue, de sorte que les éléments profilés deviennent aisément lavables. De même, ils subissent avantageusement un traitement d'ignifugation.

Enfin, de par l'utilisation de polyoléfines, lesdits éléments sont également colorables dans la masse, cette coloration étant effectuée lors de la constitution du mélange, c'est à dire, avant extrusion.

## Revendications

1. Elément profilé susceptible d'être assemblé réversiblement avec d'autres éléments du même type, comprenant au sein de son épaisseur un certain nombre d'alvéoles (2, 3, 4) s'étendant sur toute sa longueur, et réalisé en un matériau composite, dont l'un des composants est de la matière plastique, ***caractérisé*** en ce que le matériau composite constitutif est composé d'un mélange de polyoléfine(s), de sciure de bois, et éventuellement de matériaux adaptés permettant d'augmenter la rigidité dudit élément, notamment des fibres de verre, fibres de carbone, du polyaramide, des charges minérales, telles que du talc ou des carbonates, voire encore des fibres de roche.

2. Elément profilé selon la revendication 1, ***caractérisé***en ce qu'il comporte un système d'assemblage du type tenon-mortaise, ménagé au niveau de deux de ses faces latérales opposées (5, 6), chaque élément comportant une partie mâle (8) menagée sur l'une (6) desdites faces latérales, et une partie femelle (7) ménagée sur la face latérale opposée (5).

3. Elément profilé selon la revendication 2, ***caractérisé*** en ce que la partie mâle (8) du système d'assemblage est en forme de queue d'aronde ou de queue de sapin, et en ce que la partie femelle (7) est de forme complémentaire.

4. Elément profilé selon l'une des revendications 1 3, ***caractérisé*** en ce que la proportion respective de la ou des polyoléfines et de la sciure de bois dans le mélange constitutif du matériau composite est comprise entre 90/10 % et 10/90 %.

5. Element profilé selon l'une des revendications 1 à 4, ***caractérisé*** en ce que la polyoléfine est du polypropylène.

6. Element profilé selon l'une des revendications 1 à 5, ***caractérisé*** en ce qu'il est muni à chacune des ses deux extrémités d'un embout (20) inséré en force, ledit embout (20), de même largeur que celle de l'élément, étant muni de prolongements (21. 22) venant coulisser au sein des alvéoles dudit élément et de section sensiblement complémentaire à celles-ci.

7. Elément profilé selon la revendication 6, ***caractérisé*** en ce que les prolongements (21, 22) de l'embout (20) présentent des nervures en saillie (28) sur au moins l'une de leurs faces latérales.

8. Elément profilé selon l'une des revendications 6 et 7, ***caractérisé*** en ce que l'embout (20) comporte une zone amincie (27), destinée à être insérée au niveau d'une structure de mise en place desdits éléments.

9. Elément profilé selon l'une des revendications 1 à 8, ***caractérisé*** en ce que l'une des alvéoles est munie d'un élément de renfort (29), inséré par coulissement, dont l'une des dimensions est sensiblement égale à la hauteur interne desdites alvéoles.

10. Elément profilé selon l'une des revendications 1 8, ***caractérisé*** en ce que l'une des alvéoles (2, 3, 4) définies au sein dudit élément est comblée par la matière constitutive de celui-ci.

11. Elément profilé selon l'une des revendications 1 8, ***caractérisé*** en ce que les alvéoles (2, 3, 4) définies au sein dudit élément sont comblées par de la mousse plastique expansible, notamment du polyuréthanne, du polystyrène ou du polyéthylène.

12. Elément profilé selon l'une des revendications 1 à 5, ***caractérisé*** en ce que l'alvéole centrale (3) définie au sein dudit élément constitue une canalisation, susceptible de permettre la circulation d'un fluide calorifique ou frigorifique.

13. Cloison démontable, ***caractérisée*** en ce qu'elle est constituée d'éléments profilés selon l'une des revendications 1 à 12.

14. Cloison démontable selon la revendication 13, ***caractérisée*** en ce que ses bords latéraux sont constitués d'éléments profilés selon l'une des revendications 1 à 12, dont l'une des faces latérales principales est exempte de système d'assemblage (7, 8).

15. Cloison démontable selon l'une des revendications 13 et 14, ***caractérisée*** en ce qu'elle définit un parquet.

16. Cloison démontable selon la revendication 15, ***caractérisée*** en ce que la cohésion du parquet est renforcée par des embouts (11) profilés emboîtés dans les alvéoles (2, 3, 4) des éléments constitutifs du parquet au niveau des bords latéraux dudit parquet.

17. Cloison démontable selon la revendication 16, ***caractérisée*** en ce que le parquet est destiné à reposer sur des tasseaux et chevrons (30), fixés sur les éléments qui le constituent par vissage ou clouage effectué par en dessous, lesdits vis et/ou clou venant s'ancrer dans lesdits éléments.

18. Cloison démontable selon la revendication 16, ***caractérisée*** en ce que le parquet est destiné à assurer le transfert d'un fluide calorifique ou frigorifique, les extrémités des éléments constitutifs dudit parquet aboutissant au niveau d'un bord latéral recevant un élément supplémentaire de jonction (11), emboîtable dans lesdits éléments, et mettant en communication l'alvéole centrale (3) de deux éléments adjacents, afin d'assurer la continuité de la circulation du fluide au sein dudit parquet.

## Claims

1. A profiled element capable of being reversibly assembled with other elements of the same type, comprising within its thickness a certain number of cells (2, 3, 4) extending along its entire length, and made of a composite material, one constituent of which is plastic material, characterised in that the constituent composite material is made up of a mixture of polyolefine(s), sawdust and possibly adapted material allowing the rigidity of said element to be increased, notably glass fibres, carbon fibres, polyaramide, stone powders, such as talc or carbonates, and even rock fibres.

2. Profiled element according to Claim 1, characterised in that it includes an assembly system of the tenon and mortise type, arranged at two of its opposite side faces (5, 6), each element including a male part (8) arranged on one (6) of said side faces and a female part (7) arranged on the opposite side face (5).

3. Profiled element according to Claim 2, characterised in that male part (8) of the assembly system is in the shape of a dovetail or a swallowtail and female part (7) is of a complementary shape.

4. Profiled element according to one of Claims 1 to 3, characterised in that the ratio of the polyolefine(s) to the sawdust in the constituent mixture of the composite material is between 90%:10% and 10%:90% respectively.

5. Profiled element according to one of Claims 1 to 4, characterised in that the polyolefine is polypropylene.

6. Profiled element according to one of Claims 1 to 5, characterised in that it is provided at each of its two ends with a forcibly inserted joining piece (20), said joining piece (20) being of the same width as the element and provided with extensions (21, 22) that slide into the cells of said element and with a section substantially complementary to these.

7. Profiled element according to Claim 6, characterised in that extensions (21, 22) of joining piece (20) have protruding ribs (28) on at least one of their side faces.

8. Profiled element according to either Claim 6 or 7, characterised in that joining piece (20) includes a tapered section (27), intended for insertion at a mounting structure of said elements.

9. Profiled element according to one of Claims 1 to 8, characterised in that one of the cells is provided with a reinforcing element (29), inserted by sliding, one dimension of which is substantially the same as the internal height of said cells.

10. Profiled element according to one of Claims 1 to 8, characterised in that one of cells (2, 3, 4) defined within said element is filled with the constituent material of said element.

11. Profiled element according to one of Claims 1 to 8, characterised in that cells (2, 3, 4) defined within said element are filled with expanding plastic foam, notably polyurethane, polystyrene or polyethylene.

12. Profiled element according to one of Claims 1 to 5, characterised in that central cell (3) defined within said element constitutes a pipe capable of allowing the circulation of a heating or cooling fluid.

13. A removable partition, characterised in that it is constituted by profiled elements according to one of Claims 1 to 12.

14. Removable partition according to Claim 13, characterised in that its side edges are constituted by profiled elements according to one of Claims 1 to 12, one main side face of which has no assembly system (7, 8).

15. Removable partition according to either Claim 13 or 14, characterised in that it defines a strip flooring.

16. Removable partition according to Claim 15, characterised in that the cohesion of the strip flooring is reinforced by profiled joining pieces (11) fitted inside the cells (2, 3, 4) of the constituent elements of the strip flooring at the side edges of said strip flooring.

17. Removable partition according to Claim 16, characterised in that the strip flooring is intended to rest on fillets and rafters (30), fixed on the elements that constitute it by screwing or nailing from below, said screw andlor nail fixedly engaging said elements.

18. Removable partition according to Claim 16, characterised in that the strip flooring is intended to ensure the transfer of a heating or cooling fluid, the ends of the constituent elements of said strip flooring opening into a side edge receiving an additional connecting element (11), capable of fitting into said elements and bringing into communication central cell (3) of two adjacent elements, in order to ensure continuous fluid circulation within said strip flooring.

## Patentansprüche

1. Profilelement, welches dazu geeignet ist, lösbar mit weiteren Elementen desselben Typs verbunden zu werden, im Inneren seiner Dicke eine bestimmte Anzahl sich über seine gesamte Länge erstreckende Zellen (2, 3, 4) umfaßt und aus einem Verbundstoff hergestellt ist, bei dem einer der Bestandteile Kunststoff ist, **dadurch gekennzeichnet,** daß der Verbundstoff, aus dem es gebildet ist, aus einer Mischung von Polyolefin(en), Holzspänen und eventuell geeigneten Materialien besteht, welche es ermöglichen, die Steifigkeit des genannten Elements zu erhöhen, insbesondere Glasfasern, Kohlenstoff-Fasern, Polyaramid, mineralischen Füllstoffen wie Talk oder Karbonaten oder auch Steinwolle.

2. Profilelement nach Anspruch 1, **dadurch gekennzeichnet**, daß es ein Verbindungssystem des Typs einer Steckverbindung umfaßt, welches auf zwei seiner gegenüberliegenden Seitenflächen (5, 6) angeordnet ist, wobei jedes Element ein auf einer (6) der genannten Seitenflächen angeordnetes einsteckbares Teil (8) und ein auf der gegenüberliegenden Seitenfläche (5) angeordnetes aufnehmendes Teil (7) umfaßt.

3. Profilelement nach Anspruch 2, **dadurch gekennzeichnet,** daß das einsteckbare Teil (8) des Verbindungssystems eine Schwalbenschwanzform oder Doppeltrapezform aufweist und daß das aufnehmende Teil (7) eine dazu komplementäre Form hat.

4. Profilelement nach einem der Ansprüche 1 bis 3, **dadurch gekennzeichnet,** daß das jeweilige Verhältnis des oder der Polyolefine und der Holzspäne in der den Verbundstoff bildenden Mischung zwischen 90/10 % und 10/90 % liegt.

5. Profilelement nach einem der Ansprüche 1 bis 4, **dadurch gekennzeichnet,** daß das Polyolefin Polypropylen ist.

6. Profilelement nach einem der Ansprüche 1 bis 5, **dadurch gekennzeichnet,** daß es an jedem seiner beiden Enden mit einem eingedrückten Ansatzstück (20) versehen ist, welches die gleiche Breite wie das Element aufweist und mit Fortsätzen (21, 22) versehen ist, die in das Innere der Zellen des genannten Elementes einschiebbar sind und einen zu diesen im wesentlichen komplementären Querschnitt aufweisen.

7. Profilelement nach Anspruch 6, **dadurch gekennzeichnet,** daß die Fortsätze (21, 22) des Ansatzstücks (20) hervorstehende Rippen (28) auf wenigstens einer ihrer Seitenflächen aufweisen.

8. Profilelement nach einem der Ansprüche 6 und 7, **dadurch gekennzeichnet,** daß das Ansatzstück (20) einen dünnen Bereich (27) umfaßt, welcher dazu bestimmt ist, in eine Struktur zum Anbringen der genannten Elemente eingefügt zu werden.

9. Profilelement nach einem der Ansprüche 1 bis 8, **dadurch gekennzeichnet,** daß eine der Zellen mit einem durch Einschieben eingefügten Verstärkungselement (29) versehen ist, bei dem eine der Abmessungen im wesentlichen gleich der inneren Höhe der genannten Zellen ist.

10. Profilelement nach einem der Ansprüche 1 bis 8, **dadurch gekennzeichnet,** daß eine der im Inneren des genannten Elements definierten Zellen (2, 3, 4) mit dem dieses bildenden Material ausgefüllt ist.

11. Profilelement nach einem der Ansprüche 1 bis 8, **dadurch gekennzeich**net, daß die im Inneren des genannten Elements definierten Zellen (2, 3, 4) mit ausdehnbarem Kunstharzschaum, insbesondere aus Polyurethan, Polystyrol oder Polyethylen, ausgefüllt sind.

12. Profilelement nach einem der Ansprüche 1 bis 5, **dadurch gekennzeichnet,** daß die mittlere im Inneren des genannten Elements definierte Zelle (3) eine Leitung bildet, welche geeignet ist, den Durchfluß eines Wärme- oder Kühlfluids zu ermöglichen.

13. Zerlegbare Wandung, **dadurch gekennzeichnet,** daß sie aus Profilelementen nach einem der Ansprüche 1 bis 12 besteht.

14. Zerlegbare Wandung nach Anspruch 13, **dadurch gekennzeichnet,** daß ihre seitlichen Ränder aus Profilelementen nach einem der Ansprüche 1 bis 12 gebildet sind, bei denen eine der Haupt-Seitenflächen frei von einem Verbindungssystem (7, 8) ist.

15. Zerlegbare Wandung nach einem der Ansprüche 13 und 14, **dadurch gekennzeichnet,** daß sie ein Parkett bildet.

16. Zerlegbare Wandung nach Anspruch 15, **dadurch gekennzeichnet,** daß der Zusammenhalt des Parketts durch Profil-Ansatzstücke (11) verstärkt ist, welche in die Zellen (2, 3, 4) der das Parkett bildenden Elemente im Bereich der seitlichen Ränder des genannten Parketts eingesetzt sind.

17. Zerlegbare Wandung nach Anspruch 16, **dadurch gekennzeichnet,** daß das Parkett dazu bestimmt ist, auf Leisten und Sparren (30) aufzuliegen, welche an den Elementen, aus denen es besteht, durch von unten ausgeführte Schraub- oder Nagelverbindungen befestigt sind, wobei die genannten Schrauben und/oder Nägel in den genannten Elementen verankert sind.

18. Zerlegbare Wandung nach Anspruch 16, **dadurch gekennzeichnet,** daß das Parkett dazu bestimmt ist, den Durchgang eines Wärme- oder Kühlfluids zu gewährleisten, wobei die Enden der das genannte Parkett bildenden Elemente, welche in dem Bereich eines seitlichen Randes enden, ein zusätzliches, in die genannten Elemente einsetzbares Verbindungselement (11) aufnehmen, das die jeweils mittlere Zelle (3) zweier benachbarter Elemente miteinander verbindet, um die Kontinuität des Durchflusses des Fluids im Inneren des genannten Parketts zu gewährleisten.
